# EUROPEAN PATENT SPECIFICATION

(11) **EP 1 499 517 B1**
(45) Date of publication and mention of the grant of the patent: **13.06.2007**
(21) Application number: 03711713.2
(22) Date of filing: 15.04.2003
(51) Int. Cl.: B60P 1/64, B60P 3/42, B60P 3/345, B60D 1/36, B62D 53/04, B62D 63/08, B60P 1/42

(54) **MOUNTING APPARATUS**
MONTAGEVORRICHTUNG
APPAREIL DE FIXATION

(30) Priority: 17.04.2002 AU PS175902; 01.04.2003 AU 2003203469
(43) Date of publication of application: 26.01.2005
(73) Proprietor: Lunson, Lance Albert, Forth, Tasmania 7310 (AU)
(72) Inventor: Lunson, Lance Albert, Forth, Tasmania 7310 (AU)
(74) Representative: Strych, Werner Maximilian Josef
(86) International application number: PCT/AU2003/000449
(87) International publication number: WO 2003/089267

(56) References cited:
- WO-A-90/08052
- AT-B- 396 347
- DE-A- 3 108 123
- DE-A- 3 501 107
- DE-A1- 3 501 107
- FR-A- 1 197 434
- FR-A- 2 068 826
- GB-A- 2 006 130
- GB-A- 2 220 921
- GB-A- 2 240 751
- US-A- 3 719 244
- US-A- 4 314 726
- US-A- 5 718 554
- US-A- 5 967 596
- DATABASE WPI Week 197725, Derwent Publications Ltd., London, GB; Class Q15, AN 1977-G8430Y, XP002994625 & SU 534 378 A (LENTORGBYTTRANS CAR) 03 March 1977

## Description

### Field of the Invention

The present invention relates to a mounting apparatus for use in a vehicle assembly. In particular, although not exclusively, the invention relates to a mounting apparatus to mount a motor home to a vehicle. However, the invention is not strictly limited in its application to motor homes and may be applied to any situation where it is desirable to secure an auxiliary body to a vehicle.

### Background to the invention

Caravanning is a popular pastime. However, there are difficulties associated with towing a caravan behind a vehicle. In particular, inexperienced drivers may find the articulated nature of the caravan and vehicle presents difficulties in manoeuvring the caravan, especially backwards. Furthermore, accessibility of a vehicle and a towed caravan may be limited. A popular alternative is a motor home. However, there are some distinct disadvantages associated with motor homes too. For example, once a suitable campsite base has been selected, if it is further desired to explore in the vehicle away from the campsite, the whole motor home must be packed-up- and the contents secured before the vehicle can be moved. This may be particularly inconvenient for small day trips from the campsite base. Another disadvantage is that the motor home incorporates a whole vehicle which is not able to be used for other requirements.

US-A-3,719,244 discloses a vehicle which is made up of a power unit and a self-supporting living unit. The two units are telescoped together and interfitted to form an assembly for driving. Specifically, the power unit has two spaced channel members which define receptacles. Lubricated guide rollers line the receptacles. The living unit has two spaced slides which are received in the receptacles. The living unit is drawn into engagement with the power unit by means of a winch. The latches are provided on either side of the power unit with the latch tongue received in the forward ends of the slides. The shapes of the slides and the receptacles are uniform. In order to provide a reasonable secure connection the tolerance therebetween would need to be relatively small. Therefore, this presents difficulties for initially aligning the slides with the receptacles. The alignment would need to be nearly perfect to enable the slides to be received in the receptacles. This makes mounting of the living unit onto the power unit difficult in practice. Furthermore, once the slide is received within the receptacles there is still some free play between the slide and the receptacles. Otherwise, the slides would not be able to slide relatively to the rollers into the receptacles. Thus, even when the latches are engaged there will be still a degree of free play between the slides and the receptacles. This could cause the slides to rattle within the receptacles, with the end result being noisy and possibly unsafe in transit.

It is therefore an object of the present invention to provide an apparatus which addresses the foregoing disadvantages or at least provides the public with a useful choice.

### Summary of the invention

The present invention proposes a vehicle assembly having the features of claim 1.

In accordance with the present invention, there is provided, a vehicle assembly comprising a self propelled vehicle and a load mountable to the vehicle in a mounted position relative to the vehicle and being detachable therefrom wherein the vehicle is provided with a first guide means fixed thereto and the load is provided with second guide means fixed thereto to position the load in the mounted position relative to the vehicle, wherein the guide means are mutually cooperative to facilitate mounting of the load to the vehicle and the guide means are tapered to facilitate positioning of the load relative to the vehicle, the first guide means being of complementary shape to the second guide means when in the mounted position.

The guide means are of rectangular section and tapered in both dimensions of their cross-sections. The first and second guide means each comprise a pair of spaced elongate members. In a preferred form of the invention, the members of the first guide means comprise bars of rectangular section and the members of the second guide means comprise channels, inwardly open.

In a most preferred form of the invention, the members of the first guide means are mounted to an upwardly facing surface of a trailing portion of the vehicle and the members of the second guide means is mounted to a downwardly facing surface of a leading portion of the load such that the leading portion of the load is mounted atop the trailing portion of the vehicle in the mounted position.

In accordance with further features of the present invention, there is provided, an apparatus for a vehicle assembly comprising a self propelled vehicle and a load mountable to the vehicle in a mounted position relative to the vehicle and being detachable therefrom, the apparatus incorporating a drive means which is selectively drivable to move the load away from the mounted position on the vehicle.

The apparatus is preferably slidably mounted to the vehicle and the apparatus is operable to overcome the frictional engagement between the load and the vehicle. In a preferred form of the invention, the apparatus is also operable to secure the load in the mounted position.

In a most preferred form of the invention, the apparatus is also operable to draw the load towards the vehicle from a tripping position relative to the vehicle to the mounted position. A tripping means may also be provided to detect when the load is in the tripping position. Preferably, the apparatus is operable to allow for the load to be partially mounted on the vehicle by driving of the vehicle, with the apparatus becoming operable to draw the load to the mounted position on the load reaching the tripping position relative to the vehicle.

The drive means is most suitably independent of the drive of the vehicle. Where the invention operates to also secure the load to the vehicle, a single drive means may be provided to move the load away from the vehicle and to secure the load in the mounted position.

The apparatus preferably includes a clamp to clamp onto a predetermined fixed portion of the load, the clamp comprising two clamping portions, one movable relative to the other between a released position and a clamping position, the clamp also being movable in use on a vehicle, relative to the vehicle. The clamp may be slidable relative to the vehicle. Furthermore, the clamp may be movable in the clamping position to move the load towards the mounted position. Preferably, the clamp is movable in the released position to move the load away from the mounted position.

The two clamping portions of the clamp may comprise a forward clamping portion and a movable rearward clamping portion, the apparatus being such that when the rearward clamping portion is disposed in the released position and the predetermined portion of the load is moved adjacent to the forward clamping portion, the rearward clamping portion is driven by the drive means to be moved to the clamping position, whereupon the drive means moves the clamp and thereby the load to the mounted position. Furthermore, the apparatus may be operable such that when in the mounted position, selective operation of the drive means causes the forward portion of the clamping means to move rearwardly and thereby move the predetermined portion of the load away from the mounted position on the vehicle.

In a most preferred form of the invention, the rearward clamping portion comprises a pivotally mounted toggle driven to rotate from the released position to the clamping position, such that on being further driven, the clamp is moved forwardly. A biasing means may be provided to bias the forward portion of the clamp rearwardly.

Preferably, the load comprises an accommodation unit. Alternatively, the load comprises a tray. The load may have a single axle and a plurality of struts to support the load when detached from the vehicle.

According to the invention, the vehicle is provided with a first guide means fixed thereto and the load is provided with second guide means fixed thereto to position the load in the mounted position relative to the vehicle wherein the first guide means is complementary to the second guide means. The guide means is tapered to facilitate positioning of the load relative to the vehicle. Furthermore, the first and second guide means each comprise elongate members.

In accordance with further features of the invention, there is provided an apparatus for a vehicle assembly comprising a self propelled vehicle and a load mountable to the vehicle in a fixed mounted position relative to the vehicle and being detachable therefrom, the apparatus incorporating a drive means which is selectively drivable to draw the load towards the vehicle from a tripping position relative to the vehicle to the mounted position.

### Brief Description of the Drawings

A preferred embodiment of the invention will now be described, by way of example only, with reference to the accompanying drawings, in which:
Figure 1 is a side view of a vehicle and an accommodation unit for mounting to the vehicle;
Figure 2 is a side view of the accommodation unit mounted to the vehicle of Figure 1;
Figure 3 is a top plan view of the respective vehicle-mounted and load-mounted portions of a preferred form of the apparatus in accordance with a first preferred embodiment of the invention;
Figure 4 is a cross-sectional view of part of the vehicle-mounted apparatus in Figure 3 along the line A-A;
Figures 5A, 5B and 5C are partional cross-sectional views showing the mounting operation of the apparatus of Figure 3;
Figures 6A, 6B, 6C and 6D are partial cross-sectional views showing the releasing operation of the apparatus in Figure 3; and
Figure 7 is a schematic diagram of the electrical circuit associated with the apparatus of Figure 3 for controlling the operation of the apparatus.

### Description of the Preferred Embodiment

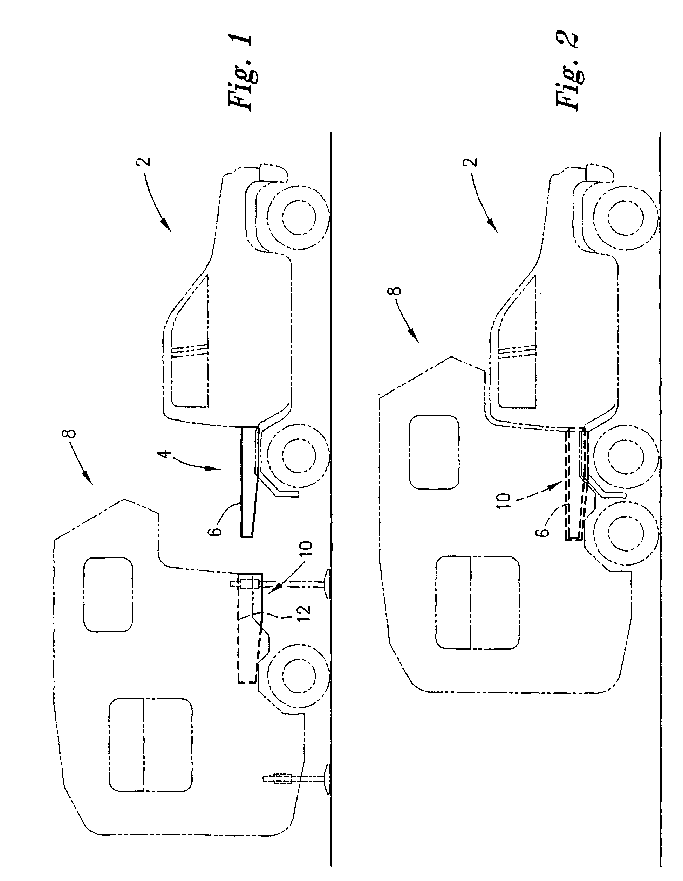

Referring to Figures 1, 2 and 3, a vehicle 2 has a trailing portion 4 that includes an upwardly facing surface 6 on which is rigidly mountable an accommodation unit 8 to enable transport of the accommodation unit 8 by the vehicle 2. The accommodation unit 8 includes a leading portion 10 having a downwardly facing surface 12 to which is attached a first portion 18 of a mounting apparatus 14. A second portion 16 of the apparatus 14 is incorporated into the trailing portion 4 of the vehicle 2 to project through the upwardly facing surface 6 such that the second portion 16 is engageable with the first portion 18 of the accommodation unit 8. When the respective first and second portions 18, 16 are brought together they enable rigid mounting of the accommodation unit 8 to the vehicle 2 for transport. Furthermore, the apparatus 14 enables disengagement of the accommodation unit 8 from the vehicle 2 thereby freeing the vehicle for use without the burden of the accommodation unit 8. It will be appreciated that the accommodation unit 8 is merely an example of the type of units which may be mounted to the vehicle. For instance, an alternative unit may comprise a tray for receiving a tradesman's equipment or a courier's packages.

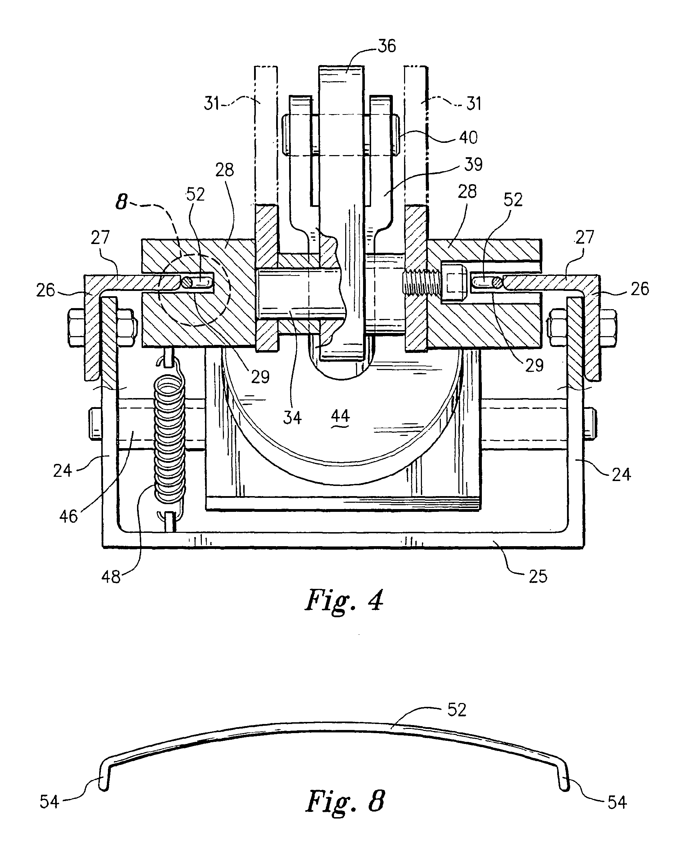

The second portion 16, which forms the drive means 20 of the apparatus 14, includes a support bar 22 linked to the chassis of the vehicle 2 and a pair of spaced walls 24 depending from the bar 22. The walls 24 are joined by floor 25 (Figure 4) from the support bar 22. Each wall 24 has a bracket 26 attached thereto via bolts, such that a flange 27 on each bracket projects inwardly of the walls 24 to define a pair of spaced rails on which ride runners 28 of forward clamping portion 30. The forward clamping portion 30 further includes upstanding abutments 31 linked by a rigid web 32. A groove 29 formed in runners 28 receives a respective flange 27 to enable reciprocal sliding movement of the forward clamping portion 30 along the brackets 26 (Figure 4).

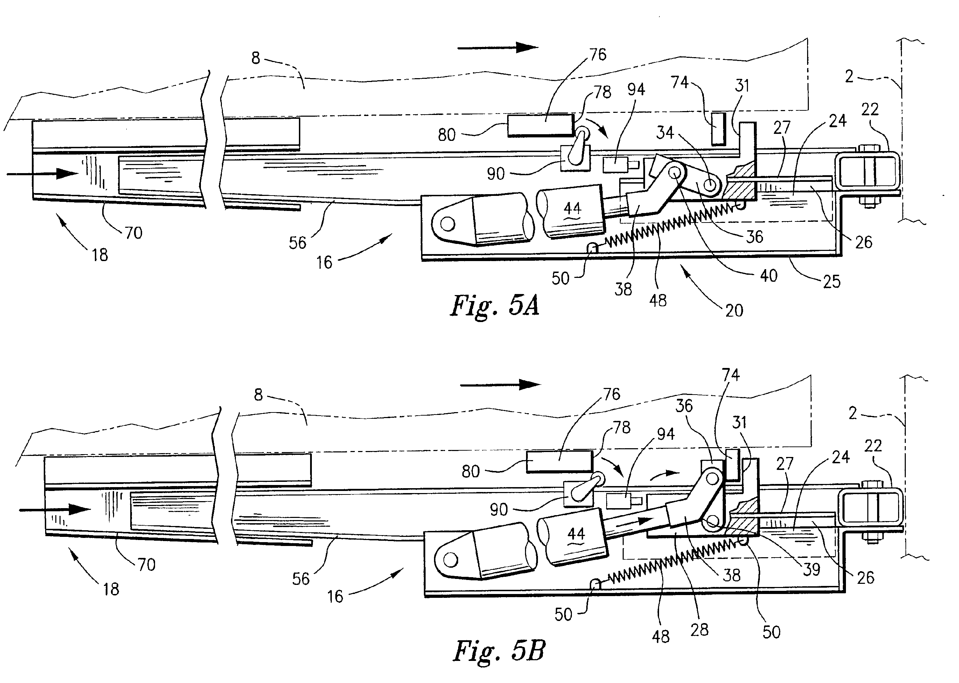

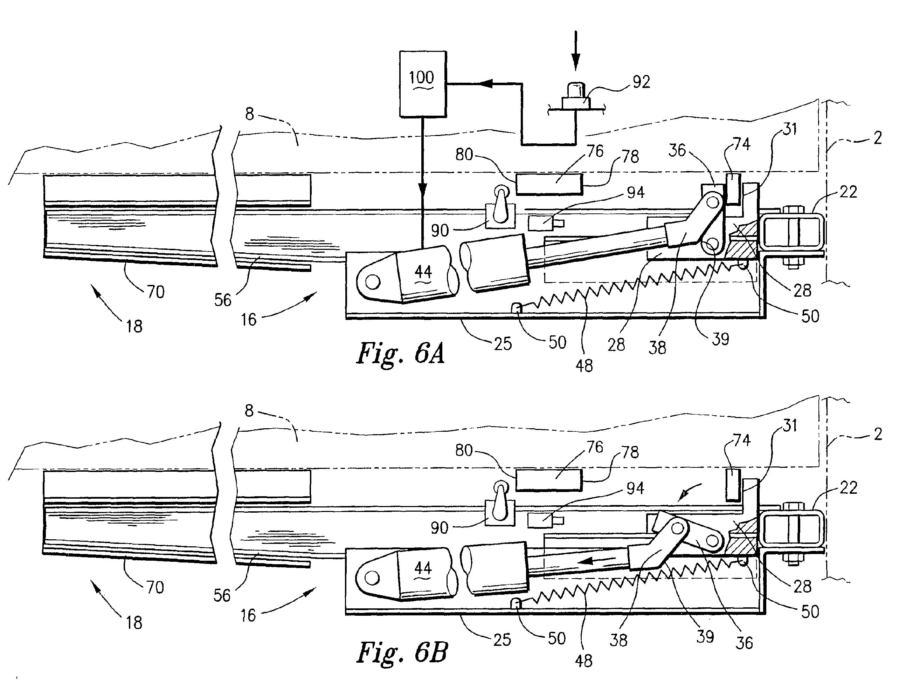

Mounted between the runners 28 midway along their length is a pivot shaft 34 on which a rearward clamping portion, formed as toggle 36, is pivotally mounted (Figures 5A and 5B). One end of the toggle 36 is mounted to the pivot shaft 34. Near the opposite end, a clevis pin 40 is mounted to enable pivotal movement of the toggle 36 relative to a clevis 38 also attached to the clevis pin 40. The clevis 38 is mounted to an hydraulic ram 44 such that reciprocal movement of the ram 44 causes rotation of the toggle 36 relative to the forward clamping portion 30. Extension of the ram 44 causes the toggle 36 to rotate upwardly toward the abutments 31 until a face 39 of the clevis 38 contacts the side of the toggle 36 intermediate the pivot shaft 34 and clevis pin 40 to arrest further rotational movement (Figure 5B). This is the clamping position of the toggle 36. From this position, retraction of the ram 44 causes the toggle 36 to rotate away from the clamping position to the release position shown in Figures 5A and 6B.

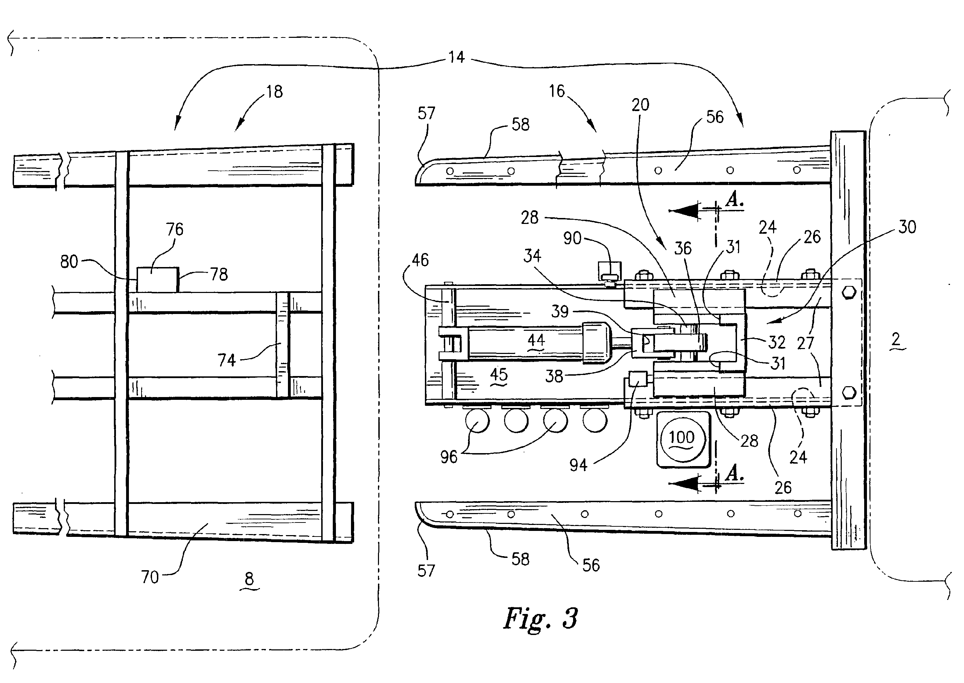

The second portion 16 further includes guide means in the form of tapered members 56 that have a teflon coating on the opposed outer sides 58 to facilitate sliding engagement with the first portion 18. A switch 90 located on one wall 24 (Figures 3 and 5A) is linked to a power source and activates the ram 44

A helical spring 48 fixed between projections 50 respectively located on the floor 25 and one of the runners 28 provides sufficient resistance to sliding movement of the forward clamping portion 30 such that initial extension of the ram 44 (Figure 5B) causes the toggle 36 to pivot upwardly toward the abutments 31. In the absence of the helical spring 48, initial extension of the ram 44 may cause sliding movement of the forward clamping portion 30 away from the ram 44 such that the pick up bar 74 is not moved to the clamping position. The spring 48 is also selected such that when in the mounted position, the resistance provided by the helical spring 48 is not sufficient to overcome the frictional engagement between the tapered members 56 and channels 70 to drag the forward clamping portion 30 away from the mounted position.

An alternative to the helical spring 48 is shown in Figure 4 in the form of a resilient wire 52 located in the groove 29 between the runners 28 and edge of flange 27. The resilient wire is formed with a curve (Figure 8) of sufficient length such that ends 54 project from the groove 29 to engage the ends of the runners 28 thereby retaining the resilient wire 52 within the groove during sliding movement of the forward clamping portion 30.

The first portion 18 of the apparatus 14 includes spaced channels 70 shaped complimentarily to the tapered members 56 to receive the tapered members 56 in frictional engagement. The channels 70 are mounted to a frame 72 including a pick up bar 74 for clamping between the abutments 31 and toggle 36 when in the clamping position, and striker plate 76 for actuating the switch 90.

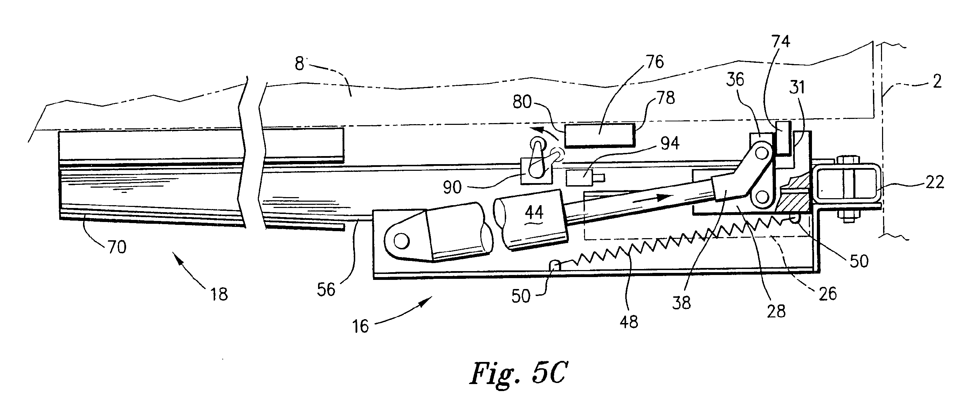

Assembly of the first and second portions 18, 16 is achieved by manoeuvring the vehicle 2 relative to the accommodation unit, such that the tapered members 56 are received in the channels 70. The rounded ends 57 of the tapered members assist with aligning the second portion 16 with the first portion 18 such that an angled or off-centre approach of the second portion 16 toward the first portion 18 will be corrected by the rounded ends coaxing the correct arrangement of the tapered members 56 within the channels 70. Further insertion of the tapered members 56 into the channels 70 brings the striker plate 76 closer to the switch 90. Upon a leading edge 78 of the striker plate 76 tripping the switch 90, the ram 44 is activated to extend the arm 42 and cause upward rotation of the toggle 36 relative to the runners 28. At the point that the ram is activated, the pickup bar 74 is located in such proximity to the abutments 31 that the upward rotational movement of the toggle 36 captures the pick up bar 74 in a gap between the abutments 31 and toggle 36 in its clamping position (Figure 5B). At this stage the striker plate 76 remains in contact with the switch 90 such that the ram 44 remains activated. Further extension of the ram 44 causes sliding movement of the forward clamping portion 30 such that the pick up bar 74, and associated first portion 18, moves towards a mounted position as depicted in Figure 5C. The ram 44 is deactivated when the switch 90 disengages the striker plate 76 by falling off a trailing edge 80.

Operation of the ram 44 to drag the first portion 18 to the mounted position causes the tapered members 56 and channels 70 to frictionally engage, thereby assisting to retain the first portion 18 in the mounted position relative the second portion 16.

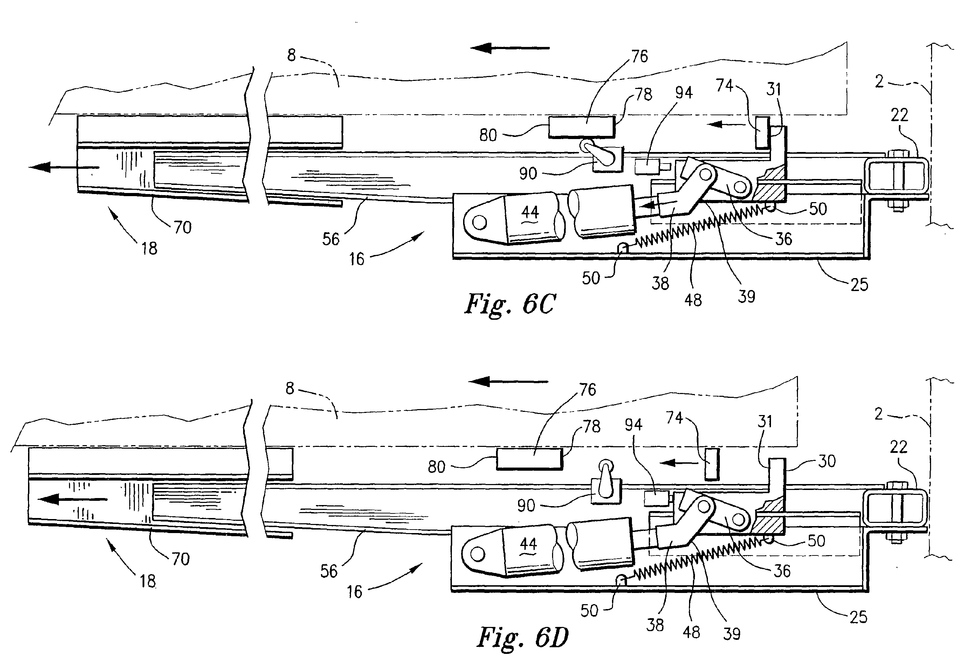

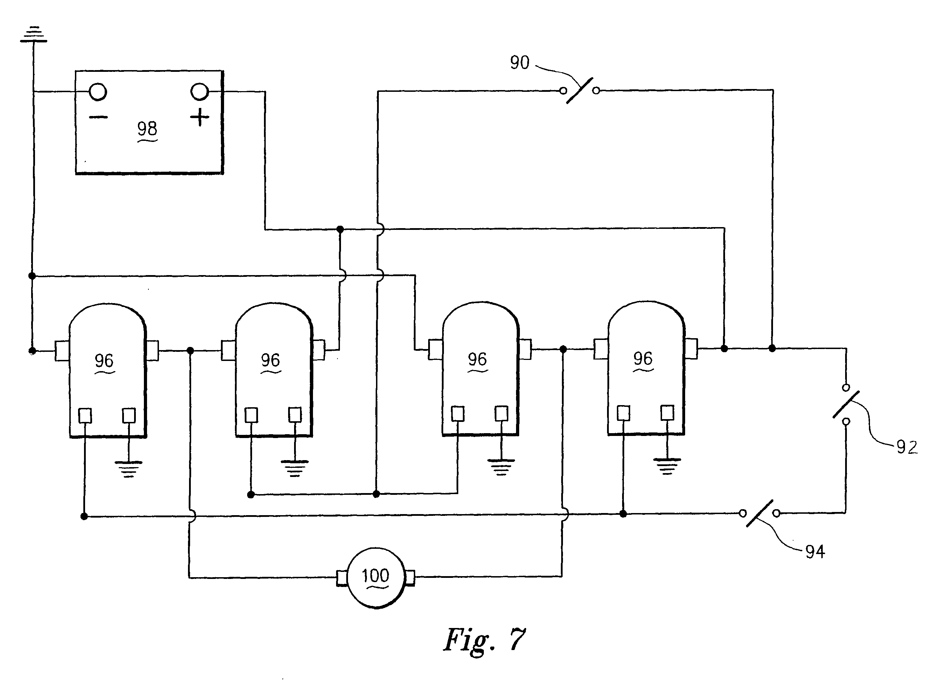

The accommodation unit 8 is disengaged from the vehicle 2 by manually actuating ejection button 92 (Figure 7). Such actuation trips ejection button switch 93 and breaker switch 94 such that the solenoids 96 activate the ram 44 to retract (Figures 6A, 6B). Initially, retraction of the arm 42 causes pivotal movement of the toggle 36 away from abutments 31 thereby releasing the pick up bar 74 from clamping therebetween. As the ram is retracted, the forward clamping portion 30 is pulled toward the ram 44 along the brackets 26, whereby the abutments 31 drag the pick up bar 74 of the first portion 18 in a rearward direction thereby breaking the frictional engagement of the tapered members 56 with the channels 70 (Figure 6C). Rearward movement of the forward clamping portion 30 is arrested when one of the runners 28 trips the breaker switch 94 (Figure 6D) thereby breaking the solenoid circuit. At this point, the first portion 18 is free of the second portion 16 so that the vehicle 2 can be driven away free of the encumbrance of the accommodation unit 8 and used for any purpose as the driver desires.

It will be appreciated that the accommodation unit would include a number of support struts for stabilising the accommodation unit 8 when it is not engaged with the vehicle 2. Preferably, the accommodation unit 8 further includes a manually operated brake acting on the wheels of the accommodation unit 8 to further prevent movement of the accommodation unit 8 when it is free of the vehicle 2.

## Claims

1. A vehicle assembly comprising a self propelled vehicle (2) and a load (8) mountable to the vehicle (2) in a mounted position relative to the vehicle (2) and being detachable therefrom, wherein the vehicle (2) is provided with a first guide means (56) fixed thereto and the load (8) is provided with second guide means (70) fixed thereto to position the load (8) in the mounted position relative to the vehicle, wherein the guide means (56, 70) are mutually cooperable to facilitate mounting of the load (8) to the vehicle (2), wherein one of the first and second guide means (56, 70) is in the form of two spaced elongate mounting members (56) and the other is in the form of two spaced elongate receiving members (70), each to receive a respective mounting member (56), **characterised in that** each receiving member (70) being of complementary shape to the associated mounting member (56) when in the mounted position and the mounting members (56) are tapered along their length to facilitate positioning of the load (8) relative to the vehicle (2), the mounting members (56) each having a rectangular cross-section, with the tapering being in both dimensions of their cross-sections.

2. The vehicle assembly as claimed in claim 1 wherein the mounting members (56) comprise bars of rectangular section and the receiving members (70) comprise channels inwardly open.

3. The vehicle assembly as claimed in claim 1 or 2 wherein the first guide means (56) is mounted to an upwardly facing surface (6) of a trailing portion (4) of the vehicle (2) and the second guide means (70) is mounted to a downwardly facing surface (12) of a leading portion (10) of the load (8) such that the leading portion (10) of the load (8) is mounted atop the trailing portion (4) of the vehicle (2) in the mounted position.

4. The vehicle assembly as claimed in any one of the preceding claims wherein the free ends of the mounting members (56) are rounded to aid entry into the receiving members (70).

5. The vehicle assembly as claimed in any one of the preceding claims further comprising:
a mounting apparatus (14) incorporating a drive means (20), the load (8) being mountable to the vehicle (2) in part by driving the vehicle (2) towards the load (8), the drive means (20) being operable on the vehicle (2) reaching a tripping position relative to the load (8) whereupon the drive means (20) is operable to draw the load (8) further towards the vehicle (2) to the mounted position.

6. The vehicle assembly as claimed in claim 5 wherein the load (8) is slidably mounted to the vehicle (2) and the mounting apparatus (14) is operable to overcome the frictional engagement between the load (8) and the vehicle (2).

7. The vehicle assembly as claimed in claim 5 or 6 being also operable to secure the load (8) in the mounted position.

8. The vehicle assembly as claimed in any one of claims 5 to 7 further including a tripping means (90) to detect when the load (8) is in the tripping position.

9. The vehicle assembly as claimed in any one of claims 5 to 8 wherein the drive means is independent of the drive of the vehicle (2).

10. The vehicle assembly as claimed in claim 8 wherein a single drive means is provided to draw the load (8) to the mounted position and to secure the load (8) in the mounted position.

11. The vehicle assembly as claimed in any one of claims 1 to 10 wherein a variety of load types is provided including an accommodation unit (8) and a tray, the self propelled vehicle (2) being adapted to be mounted with any of them.

12. The vehicle assembly as claimed in any one of claims 5 to 10 wherein the drive means (20) includes a clamp to clamp onto a predetermined portion (74) of the load (8), the clamp comprising two clamping portions (30, 36), one movable relative to the other between a released position and clamping position, the clamp (30, 36) also being selectively movable in use on a vehicle (2), relative to the vehicle (2), to draw the load towards the mounted position and to move the load (8) away from the mounted position on the vehicle (2).

13. The vehicle assembly as claimed in claim 12, wherein the clamp (30, 36) is slidable relative to the vehicle (2).

14. The vehicle assembly as claimed in claim 13 wherein the clamp (30, 36) is movable in the clamping position to move the load (8) towards the mounted position.

15. The vehicle assembly as claimed in claim 13 or 14 wherein the clamp (30, 36) is movable in the released position to move the load (8) away from the mounted position.

16. The vehicle assembly as claimed in any one of claims 13 to 15 wherein the two clamping portions of the clamp comprise a forward clamping portion (30) and a movable rearward clamping portion (36), the apparatus being such that when the rearward clamping portion (36) is disposed in the released position and the predetermined portion (74) of the ioad (8) is moved adjacent to the forward clamping portion (30), the rearward clamping portion (36) is driven by a drive (44) to the clamping position, whereupon the drive (44) moves the whole clamp and thereby the load (8) to the mounted position.

17. The vehicle assembly as claimed in claim 16 being operable such that when in the mounted position, selective operation of the drive means (20) causes the forward portion of the clamping means (30, 36) to move rearwardly and thereby move the predetermined portion of the load (8) away from the mounted position on the vehicle (2).

18. The vehicle assembly as claimed in claim 16 or 17 wherein the rearward clamping portion (36) comprises a pivotally mounted toggle (36) driven to rotate from the released position to the clamping position, such that on being further driven, the clamp (30, 36) is moved forwardly.

19. The vehicle assembly as claimed in claim 18 wherein a biasing means (48, 52) is provided to resist forward or rearward movement of the forward portion (30) of the clamp.

## Patentansprüche

1. Fahrzeuganordnung mit einem selbstfahrenden Fahrzeug (2) und einer Last (8), die an dem Fahrzeug (2) in einer Befestigungsposition relativ zum Fahrzeug (2) lösbar befestigbar ist, wobei das Fahrzeug (2) mit einer daran befestigten ersten Führungseinrichtung (56) versehen ist und die Last (8) mit einer daran befestigten zweiten Führungseinrichtung (70) versehen ist, um die Last (8) in der Befestigungsposition relativ zum Fahrzeug zu positionieren, wobei die Führungseinrichtungen (56, 70) miteinander zusammenwirken können, um das Befestigen der Last (8) an dem Fahrzeug (2) zu erleichtern, und wobei eine der ersten und zweiten Führungseinrichtung (56, 70) in Form von zwei beabstandeten länglichen Befestigungelementen (56) und die andere in Form von zwei beabstandeten länglichen Aufnahmeelementen (70), die jeweils ein zugeordnetes Befestigungselement (56) aufnehmen, vorgesehen ist,
**dadurch gekennzeichnet, dass**
jedes Aufnahmeelement (70) eine zu dem zugeordneten Befestigungselement (56) komplementäre Form hat, wenn sie in der Befestigungsposition sind, und sich die Befestigungselemente (56) entlang ihrer Längen verjüngen, um das Positionieren der Last (8) relativ zum Fahrzeug (2) zu erleichtern, wobei die Befestigungselemente (56) jeweils einen rechteckigen Querschnitt haben, und wobei die Verjüngung in beiden Dimensionen ihrer Querschnitte vorhanden ist.

2. Fahrzeuganordnung nach Anspruch 1, bei der die Befestigungselemente (56) Stangen mit rechteckigem Querschnitt aufweisen und die Aufnahmeelemente (70) nach innen offene Kanäle aufweisen.

3. Fahrzeuganordnung nach Anspruch 1 oder 2, bei der die erste Führungseinrichtung (56) an einer nach oben gerichteten Fläche (6) eines hinteren Abschnitts (4) des Fahrzeugs (2) befestigt ist und die zweite Führungseinrichtung (70) an einer nach unten gerichteten Fläche (12) eines vorderen Abschnitts (10) der Last (8) befestigt ist, so dass der vordere Abschnitt (10) der Last (8) über dem hinteren Abschnitt (4) des Fahrzeugs (2) in der Befestigungsposition befestigt ist.

4. Fahrzeuganordnung nach einem der vorhergehenden Ansprüche, bei der die freien Enden der Befestigungselemente (56) abgerundet sind, um das Einführen in die Aufnahmeelemente (70) zu unterstützen.

5. Fahrzeuganordnung nach einem der vorhergehenden Ansprüche, weiterhin aufweisend:
eine Befestigungsvorrichtung (14), die eine Antriebseinrichtung (20) umfasst, wobei die Last (8) an dem Fahrzeug (2) zum Teil durch das Verfahren des Fahrzeugs (2) in Richtung auf die Last (8) befestigbar ist, und wobei die Antriebseinrichtung (20) derart betreibbar ist, dass, wenn das Fahrzeug (2) eine Auslöseposition relativ zur Last (8) erreicht hat, die Antriebseinrichtung (20) betreibbar ist, um die Last (8) weiter in Richtung auf das Fahrzeug (2) in die Befestigungsposition zu ziehen.

6. Fahrzeuganordnung nach Anspruch 5, bei der die Last (8) an dem Fahrzeug (2) gleitbeweglich befestigt ist und die Befestigungsvorrichtung (14) betreibbar ist, um die reibschlüssige Verbindung zwischen der Last (8) und dem Fahrzeug (2) zu überwinden.

7. Fahrzeuganordnung nach Anspruch 5 oder 6, die darüber hinaus betreibbar ist, um die Last (8) in der Befestigungsposition zu sichern.

8. Fahrzeuganordnung nach einem der Ansprüche 5 bis 7, weiterhin aufweisend eine Auslöseeinrichtung (90), um festzustellen, wenn sich die Last (8) in der Auslöseposition befindet.

9. Fahrzeuganordnung nach einem der Ansprüche 5 bis 8, bei der die Antriebseinrichtung unabhängig von dem Antrieb des Fahrzeugs (2) ist.

10. Fahrzeuganordnung nach Anspruch 8, bei der eine einzige Antriebseinrichtung vorgesehen ist, um die Last (8) in die Befestigungsposition zu ziehen und die Last (8) in der Befestigungsposition zu sichern.

11. Fahrzeuganordnung nach einem der Ansprüche 1 bis 10, bei der eine Vielzahl von Lastarten, einschließlich einer Wohneinheit (8) und einer Ladeeinheit, vorgesehen ist, wobei das selbstfahrende Fahrzeug (2) an jedem von ihnen befestigbar ist.

12. Fahrzeuganordnung nach einem der Ansprüche 5 bis 10, bei der die Antriebseinrichtung (20) eine Klammer zum Festklemmen an einem bestimmten Abschnitt (74) der Last (8) umfasst, wobei die Klammer zwei Klemmabschnitte (30, 36) umfasst, die relativ zueinander zwischen einer Freigabeposition und einer Klemmposition bewegbar sind, wobei die Klammer (30, 36) bei Verwendung an einem Fahrzeug (2) wahlweise auch relativ zu dem Fahrzeug (2) bewegbar ist, um die Last (8) in Richtung auf die Befestigungsposition zu ziehen und die Last (8) von der Befestigungsposition an dem Fahrzeug (2) wegzubewegen.

13. Fahrzeuganordnung nach Anspruch 12, bei der die Klammer (30, 36) relativ zum Fahrzeug (2) gleitbeweglich ist.

14. Fahrzeuganordnung nach Anspruch 13, bei der der Bügel (30, 36) in der Klemmposition bewegbar ist, um die Last (8) in Richtung auf die Befestigungsposition zu bewegen.

15. Fahrzeuganordnung nach Anspruch 13 oder 14, bei der die Klammer (30, 36) in der Freigabeposition bewegbar ist, um die Last (8) von der Befestigungsposition wegzubewegen.

16. Fahrzeuganordnung nach einem der Ansprüche 13 bis 15, bei der die beiden Klemmabschnitte der Klammer einen vorderen Klemmabschnitt (30) und einen beweglichen hinteren Klemmabschnitt (36) aufweisen, wobei die Vorrichtung derart ausgebildet ist, dass wenn der hintere Klemmabschnitt (36) in der Freigabeposition angeordnet ist und der vorbestimmte Abschnitt (74) der Last (8) benachbart zum vorderen Klemmabschnitt (30) bewegt wird, der hintere Klemmabschnitt (36) durch einen Antrieb (44) in die Klemmposition verfahren wird, woraufhin der Antrieb (44) die gesamte Klammer und **dadurch** die Last (8) in die Befestigungsposition bewegt.

17. Fahrzeuganordnung nach Anspruch 16, die derart betreibbar ist, dass, wenn sie sich in der Befestigungsposition befindet, durch ein wahlweises Betätigen der Antriebseinrichtung (20) bewirkt wird, dass sich der vordere Abschnitt der Klemmeinrichtung (30, 36) nach hinten bewegt und **dadurch** den vorbestimmten Abschnitt der Last (8) von der Befestigungsposition an dem Fahrzeug (2) wegbewegt.

18. Fahrzeuganordnung nach Anspruch 16 oder 17, bei der der hintere Klemmabschnitt (36) einen schwenkbar befestigten Hebel (36) umfasst, der angetrieben wird, um sich aus der Freigabeposition in die Klemmposition zu drehen, so dass bei einem weiteren Antreiben die Klammer (30, 36) in Richtung nach vorne bewegt wird.

19. Fahrzeuganordnung nach Anspruch 18, bei der ein Vorspannmittel (48, 52) vorgesehen ist, um einer Vorwärts- oder Rückwärtsbewegung des vorderen Abschnitts (30) der Klammer entgegenzuwirken.

## Revendications

1. Ensemble formant véhicule comprenant un véhicule automoteur (2) et une charge (8) pouvant être fixée au véhicule (2) dans une position fixée par rapport au véhicule (2) et pouvant être détachée de celui-ci, dans lequel le véhicule (2) est pourvu d'un premier moyen de guidage (56) fixé à celui-ci et la charge (8) est pourvue d'un second moyen de guidage (70) fixé à celle-ci pour positionner la charge (8) dans la position fixée par rapport au véhicule, dans lequel les moyens de guidage (56, 70) sont actionnables mutuellement pour faciliter la fixation de la charge (8) au véhicule (2), dans lequel l'un des premier et second moyens de guidage (56, 70) est conçu sous la forme de deux éléments de fixation allongés espacés (56) et l'autre est conçu sous la forme de deux éléments de réception allongés espacés (70), chacun étant destiné à recevoir un élément de fixation respectif (56), **caractérisé en ce que** chaque élément de réception (70) est de forme complémentaire à l'élément de fixation associé (56) dans la position fixée et les éléments de fixation (56) sont coniques sur leur longueur pour faciliter le positionnement de la charge (8) par rapport au véhicule (2), les éléments de fixation (56) présentant chacun une section transversale rectangulaire, la conicité étant dans les deux dimensions de leurs sections transversales.

2. Ensemble formant véhicule selon la revendication 1, dans lequel les éléments de fixation (56) comprennent des barres de section rectangulaire et les éléments de réception (70) comprennent des canaux ouverts vers l'intérieur.

3. Ensemble formant véhicule selon la revendication 1 ou 2, dans lequel le premier moyen de guidage (56) est fixé à une surface orientée vers le haut (6) d'une partie arrière (4) du véhicule (2) et le second moyen de guidage (70) est fixé à une surface orientée vers le bas (12) d'une partie avant (10) de la charge (8) de telle sorte que la partie avant (10) de la charge (8) est fixée au-dessus de la partie arrière (4) du véhicule (2) dans la position fixée.

4. Ensemble formant véhicule selon l'une quelconque des revendications précédentes, dans lequel les extrémités libres des éléments de fixation (56) sont arrondies pour les aider à entrer dans les éléments de réception (70).

5. Ensemble formant véhicule selon l'une quelconque des revendications précédentes, comprenant en outre :
un appareil de fixation (14) comprenant un moyen d'entraînement (20), la charge (8) pouvant être fixée au véhicule (2) en partie en entraînant le véhicule (2) vers la charge (8), le moyen d'entraînement (20) pouvant être actionné sur le véhicule (2) jusqu'à une position de déclenchement par rapport à la charge (8), à la suite de quoi le moyen d'entraînement (20) est actionnable pour continuer d'entraîner la charge (8) vers le véhicule (2) jusqu'à la position fixée.

6. Ensemble formant véhicule selon la revendication 5, dans lequel la charge (8) est fixée de manière coulissante au véhicule (2) et l'appareil de fixation (14) est actionnable pour surmonter la mise en prise par frottement entre la charge (8) et le véhicule (2).

7. Ensemble formant véhicule selon la revendication 5 ou 6, étant également actionnable pour assujettir la charge (8) dans la position fixée.

8. Ensemble formant véhicule selon l'une quelconque des revendications 5 à 7, comprenant en outre un moyen de déclenchement (90) pour détecter lorsque la charge (8) est dans la position de déclenchement.

9. Ensemble formant véhicule selon l'une quelconque des revendications 5 à 8, dans lequel le moyen d'entraînement est indépendant de l'entraînement du véhicule (2).

10. Ensemble formant véhicule selon la revendication 8, dans lequel un moyen d'entraînement unique est prévu pour entraîner la charge (8) dans la position fixée et pour assujettir la charge (8) dans la position fixée.

11. Ensemble formant véhicule selon l'une quelconque des revendications 1 à 10, dans lequel une variété de types de charge est prévue, comprenant une unité d'hébergement (8) et un plateau, le véhicule automoteur (2) étant adapté pour être équipé de l'un d'entre eux.

12. Ensemble formant véhicule selon l'une quelconque des revendications 5 à 10, dans lequel le moyen d'entraînement (20) comprend un collier de serrage à fixer sur une partie prédéterminée (74) de la charge (8), le collier de serrage comprenant deux parties de serrage (30, 36), l'une étant déplaçable par rapport à l'autre entre une position dégagée et une position de serrage, le collier de serrage (30, 36) étant également déplaçable de manière sélective lors de l'utilisation sur un véhicule (2), par rapport au véhicule (2), pour entraîner la charge vers la position fixée et pour éloigner la charge (8) de la position fixée sur le véhicule (2).

13. Ensemble formant véhicule selon la revendication 12, dans lequel le collier de serrage (30, 36) peut coulisser par rapport au véhicule (2).

14. Ensemble formant véhicule selon la revendication 13, dans lequel le collier de serrage (30, 36) est déplaçable dans la position de serrage pour déplacer la charge (8) vers le position fixée.

15. Ensemble formant véhicule selon la revendication 13 ou 14, dans lequel le collier de serrage (30, 36) est déplaçable dans la position dégagée pour éloigner la charge (8) de la position fixée.

16. Ensemble formant véhicule selon l'une quelconque des revendications précédentes 13 à 15, dans lequel les deux parties de serrage du collier de serrage comprennent une partie de serrage avant (30) et une partie de serrage arrière déplaçable (36), l'appareil étant tel que lorsque la partie de serrage arrière (36) est disposée dans la position dégagée et la partie prédéterminée (74) de la charge (8) est déplacée de manière adjacente à la partie de serrage avant (30), la partie de serrage arrière (36) est entraînée par un dispositif d'entraînement (44) dans la position de serrage, à la suite de quoi le dispositif d'entraînement (44) déplace l'ensemble du collier de serrage et ainsi la charge (8) dans la position fixée.

17. Ensemble formant véhicule selon la revendication 16, actionnable de telle sorte que, dans la position fixée, l'actionnement sélectif du moyen d'entraînement (20) amène la partie avant des moyens de serrage (30, 36) à se déplacer vers l'arrière et ainsi à éloigner la partie prédéterminée de la charge (8) de la position fixée sur le véhicule (2).

18. Ensemble formant véhicule selon la revendication 16 ou 17, dans lequel la partie de serrage arrière (36) comprend une articulation fixée de manière pivotante (36) entraînée pour se mettre en rotation de la position dégagée à la position de serrage, de telle sorte que la poursuite de son entraînement entraîne le déplacement vers l'avant du collier de serrage (30, 36).

19. Ensemble formant véhicule selon la revendication 18, dans lequel un moyen de rappel (48, 52) est prévu pour résister au déplacement vers l'avant ou vers l'arrière de la partie avant (30) du collier de serrage.
